# EUROPEAN PATENT APPLICATION

(11) **EP 4 495 967 A1**
(43) Date of publication of application: **22.01.2025**
(21) Application number: 24306098.5
(22) Date of filing: 03.07.2024
(51) Int. Cl.: H01H 9/02, H01H 50/14

(54) **CONTACTOR**

(30) Priority: 19.07.2023 CN 202321915628 U
(71) Applicant: SCHNEIDER ELECTRIC INDUSTRIES SAS, 92500 Rueil-Malmaison (FR)
(72) Inventor: HUAN, Zhiping, Shanghai, 201203 (CN); WANG, Yuanzhong, Shanghai, 201203 (CN); HAN, Xu, Shanghai, 201203 (CN); LI, Shaofan, Shanghai, 201203 (CN); XIE, Juan, Shanghai, 201203 (CN)
(74) Representative: Manitz Finsterwald Patent- und Rechtsanwaltspartnerschaft mbB

(57) **Abstract**

A contactor, which includes: a housing; a plurality of stationary contact brackets, fixed to the housing, wherein each of the plurality of stationary contact brackets includes a bracket body accommodated in the housing and a wiring terminal extending out of the housing and configured to be connected with an electric wire, the wiring terminal includes a sheet-shaped terminal body and a terminal hole penetrating through a thickness of the terminal body; and an isolation sheet, arranged between adjacent wiring terminals and separates the adjacent wiring terminals. The design of the contactor according to the present disclosure can meet at least four different connection modes of different customers at the same time, thus increasing the application compatibility of the contactor and reducing the design cost and management cost.

## Description

### TECHNICAL FIELD

The present disclosure relates to a contactor.

### BACKGROUND

Contactors are widely used. There are many connection modes between contactor and wires. When facing different connection methods with different demands, it is usually necessary to design different contactor interfaces, which leads to an increase in design cost, manufacturing cost, and management cost.

### SUMMARY

In view of the above problems, according to a first aspect of the present disclosure, a contactor is provided, the contactor includes a housing; a plurality of stationary contact brackets, fixed to the housing, wherein each of the plurality of stationary contact brackets includes a bracket body accommodated in the housing and a wiring terminal extending out of the housing and configured to be connected with an electric wire, the wiring terminal includes a sheet-shaped terminal body and a terminal hole penetrating through a thickness of the terminal body; and an isolation sheet, arranged between adjacent wiring terminals and separates the adjacent wiring terminals.

The design of the contactor according to the present disclosure can meet at least four different connection modes of different customers at the same time, thus increasing the application compatibility of the contactor and reducing the design cost and management cost.

The contactor according to the present disclosure can have one or more of the following features.

According to an embodiment, the isolation sheet is insulated and detachably assembled to the housing.

According to an embodiment, the contactor includes a junction box detachably assembled to the housing, and the junction box includes: a plurality of wiring holes, each of the plurality of wiring holes being configured to accommodate a corresponding wiring terminal upon the junction box being assembled to the housing; and an isolation sheet avoidance hole arranged between adjacent wiring holes and configured to allow the isolation sheet to pass through upon the junction box being assembled to the housing.

According to an embodiment, a surface of the junction box facing the housing includes a first installation feature, and a surface of the housing facing the junction box includes a second installation feature, the first installation feature and the second installation feature cooperate with each other to assemble the junction box to the housing.

According to an embodiment, the first installation feature is a mounting boss and the second installation feature is a mounting groove.

According to an embodiment, the junction box further includes: an upper crimping piece positioned above the wiring terminal; a lower crimping piece positioned below the wiring terminal; and an actuating piece configured to simultaneously drive the upper crimping piece to move downward and the lower crimping piece to move upward toward the wiring terminal upon being driven.

According to an embodiment, at least one of the upper crimping piece and the lower crimping piece is a deformable elastic piece.

According to an embodiment, the junction box includes an upper elastic element that biases the upper crimping piece downward, and/or the junction box includes a lower elastic element that biases the lower crimping piece upward.

According to an embodiment, the junction box further includes: a bolt including a bolt post configured to pass through the terminal hole of a corresponding wiring terminal and a bolt head with a diameter being lager than a diameter of the bolt post; a washer arranged between the wiring terminal and the bolt head, an outer diameter of the washer is larger than the diameter of the bolt head, and a diameter of a center hole of the washer is smaller than the diameter of the bolt head and allows the bolt post to pass through; a nut fixed to a box body of the junction box below the wiring terminal; and an upper passage extending upward from a position of the wiring terminal, thereby allowing a tool to extend downward through the upper passage from outside and tighten the bolt to the nut, so that the washer is pressed against the wiring terminal.

According to an embodiment, the contactor includes a first group of wiring terminals protruding out of the housing in a first direction and a second group of wiring terminals protruding out of the housing in a second direction opposite to the first direction.

According to an embodiment, the contactor includes three stationary contact brackets and four isolation sheets, two of the four isolation sheets are respectively arranged between adjacent wiring terminals of the first group of wiring terminals and other two of the four isolation sheets are respectively arranged between adjacent wiring terminals of the second group of wiring terminals.

### BRIEF DESCRIPTION OF DRAWINGS

In order to illustrate the technical solution of the present disclosure clearer, the accompanying drawings of the present disclosure will be described briefly in the following. The accompanying drawings described here are only for illustrative purposes of some embodiments, and are not intended to limit all embodiments of the present disclosure.
Fig. 1 is a perspective view of a contactor according to the present disclosure.
Fig. 2 is a perspective view of a contactor assembled with a first junction box according to the present disclosure.
Fig. 3 is a perspective view of a first junction box according to the present disclosure.
Fig. 4 is a perspective view of a contactor assembled with a second junction box according to the present disclosure.
Fig. 5 is a perspective view of a second junction box according to the present disclosure.
Fig. 6 is a perspective view of a contactor assembled with a third junction box according to the present disclosure.
Fig. 7 is a perspective view of a third junction box according to the present disclosure.

List of reference numerals:
1-housing
11 -installation slot
2-wiring terminal
21-terminal hole
3-isolation sheet
4junction box
41-wiring hole
42-isolation sheet avoidance hole
43-mounting boss
44-lower crimping piece
45-bolt
46-washer

### DETAILED DESCRIPTION

In order to make the purpose, technical solution and advantages of the technical solution of the present disclosure clearer, the technical solution of the embodiments of the present disclosure will be described clearly and completely with the attached drawings of the specific embodiment of the present disclosure. Like reference numerals in the drawings represent like parts. It should be noted that the described embodiment is a part of the embodiment of the present disclosure, not the whole embodiments. Based on the described embodiment of the present disclosure, all other embodiments obtained by ordinary skilled in the art without creative labor belong to the protection scope of the present disclosure.

Unless otherwise defined, technical terms or scientific terms used here shall have their ordinary meanings as understood by people with ordinary skills in the field to which this present disclosure belongs. The "first", "second" and similar words used in the specification and claims of the present disclosure patent application do not indicate any order, quantity or importance, but are only used to distinguish different components. Similar words such as "including" or "containing" mean that the elements or objects appearing before the word cover the elements or objects listed after the word and their equivalents, without excluding other elements or objects. Similar words such as "connected" or "connected" are not limited to physical or mechanical connection, but can include electrical connection, whether direct or indirect. "Up", "Down", "Left" and "Right" are only used to indicate the relative positional relationship. When the absolute position of the described object changes, the relative positional relationship may also change accordingly.

Hereinafter, the present disclosure will be described in detail by describing the example embodiments.

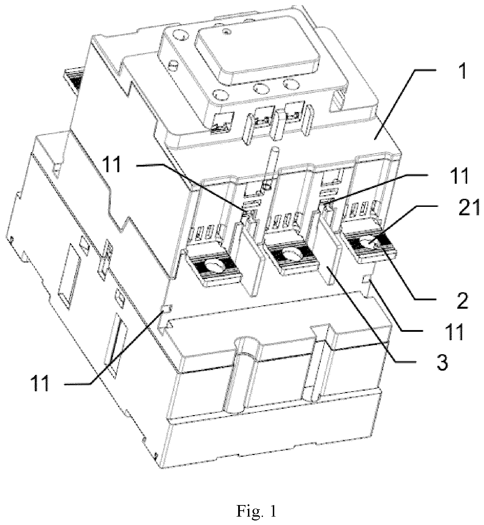

In order to meet the requirements of different customers for different connection modes, the interface design of the contactor according to the present disclosure is suitable for various connection modes. Specifically, as illustrated by Fig. 1, the contactor according to the present disclosure includes a housing 1, and the housing 1 is configured to accommodate components of the contactor. The contactor according to the present disclosure also includes a plurality of stationary contact brackets, for example, in the embodiment of Fig. 1, the contactor includes three stationary contact brackets. The plurality of stationary contact brackets are fixed to the housing 1, and each of the plurality of stationary contact brackets includes a bracket body accommodated in the housing 1 and a wiring terminal 2 extending out of the housing 1 and configured to be connected with an electric wire. As illustrated by Fig. 1, the wiring terminal 2 includes a sheet-shaped terminal body and a terminal hole 21 penetrating through the terminal body in a thickness direction. Each of the plurality of stationary contact brackets includes a first wiring terminal protruding out of the housing 1 in a first direction and a second wiring terminal protruding out of the housing 1 in a second direction opposite to the first direction, so that after the first wiring terminal and the second wiring terminal are connected with external wires, a closed loop that can be broken by the contactor can be formed. In the embodiment of Fig. 1, the first wiring terminals of the three stationary contact brackets constitute a first group of wiring terminals, and the second wiring terminals of the three stationary contact brackets constitute a second group of wiring terminals. The contactor according to the present disclosure further includes an isolation sheet 3, the isolation sheet 3 is arranged between adjacent wiring terminals 2 and separates the adjacent wiring terminals 2. In the embodiment of Fig. 1, the contactor includes four isolation sheets 3, two of the four isolation sheets 3 are respectively arranged between adjacent wiring terminals 2 of the first group of wiring terminals, and the other two of the four isolation sheets 3 are respectively arranged between adjacent wiring terminals 2 of the second group of wiring terminals. The isolation sheet 3 is insulated. Optionally, the isolation sheet 3 is detachably assembled to the housing 1. Due to the existence of the isolation sheet 3, the contactor according to the present disclosure can be directly connected with a bare copper bar or a wire with lug. Due to the above-mentioned structure of the contactor according to the present disclosure, the contactor can also be connected with a junction box 4, and can be suitable for different types of junction boxes 4. The structures of different types of junction boxes 4 are described in detail as follows.

### First junction box

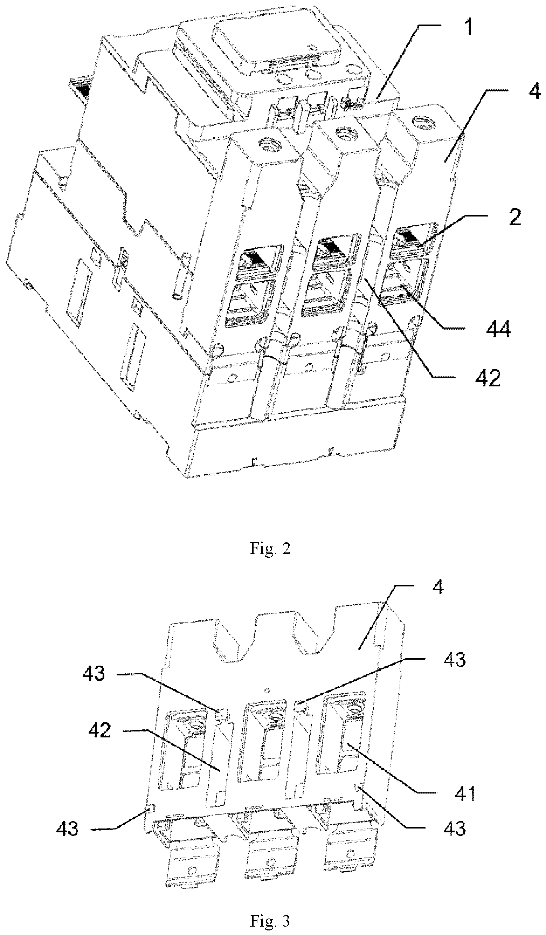

Fig. 2 is a perspective view of a contactor assembled with a first junction box 4 according to the present disclosure. Fig. 3 is a perspective view of a first junction box 4 according to the present disclosure. Referring to Figs. 2 and 3, the first junction box 4 is detachably assembled to the housing 1 of the contactor. In order to achieve detachable assembly, the first junction box 4 and the housing 1 may include complementary installation features, respectively. As one embodiment, a surface of the first junction box 4 facing the housing 1 may include a first installation feature, and the surface of the housing 1 facing the first junction box 4 may include a second installation feature, which cooperate with each other to assemble the first junction box 4 to the housing 1. Specifically, in the embodiment shown in Figs. 1 and 3, the surface of the housing 1 facing the first junction box 4 includes four mounting grooves 11, the surface of the first junction box 4 facing the housing 1 includes four mounting bosses 43, and the positions of the mounting grooves 11 and the mounting bosses 43 are corresponding, so that when it is needed to assemble the first junction box 4 to the housing 1, it is only needed to align the corresponding installation features and snap fit them in place, for example. It should be noted that the first junction box 4 and the housing 1 can be assembled in other ways, and the installation features can be arranged at other positions different from those shown in the figure, or even on other surfaces of the housing 1.

In order to realize wiring in the first junction box 4, the first junction box 4 includes a plurality of wiring holes 41, and the wiring holes 41 accommodate the corresponding wiring terminals 2 when the first junction box 4 is assembled to the housing 1. As illustrated by the embodiment of Fig. 3, the first junction box 4 includes three connection holes 41, each of the three connection holes 41 allows the corresponding wiring terminal 2 to extend into it. The electric wire can extend into the wiring hole 41 from a side of the first junction box 4 away from the housing 1 and be connected with the wiring terminal 2. In the embodiment of Fig. 2, each of the wiring holes 41 includes two openings on the side of the first junction box 4 away from the housing 1, the upper opening is located above the wiring terminal 2 and the lower opening is located below the wiring terminal 2, so that the electric wire can extend into the wiring hole 41 from the upper opening and/or the lower opening and be connected with the wiring terminal 2. The first junction box 4 may further include an upper crimping piece positioned above the wiring terminal 2; a lower crimping piece 44 positioned below the wiring terminal 2; and an actuating member, which can be driven by the user, and thus simultaneously drives the upper crimping piece to move downward and the lower crimping piece 44 to move upward toward the wiring terminal 2, thereby tightly crimping the electric wire with the wiring terminal 2.

The first junction box 4 further includes an isolation sheet avoidance hole 42, as illustrated by Fig. 3, the isolation sheet avoidance hole 42 is arranged between adjacent wiring holes 41 and configured to allow the isolation sheet 3 to pass through when the first junction box 4 is assembled to the housing 1. Through the design of the first junction box 4, the interference between the first junction box 4 and the isolation sheet 3 is avoided, and the first junction box 4 can be directly assembled without disassembling the isolation sheet 3, so that the contactor according to the present disclosure can be suitable for different connection modes and can be conveniently switched between different connection modes.

### Second junction box

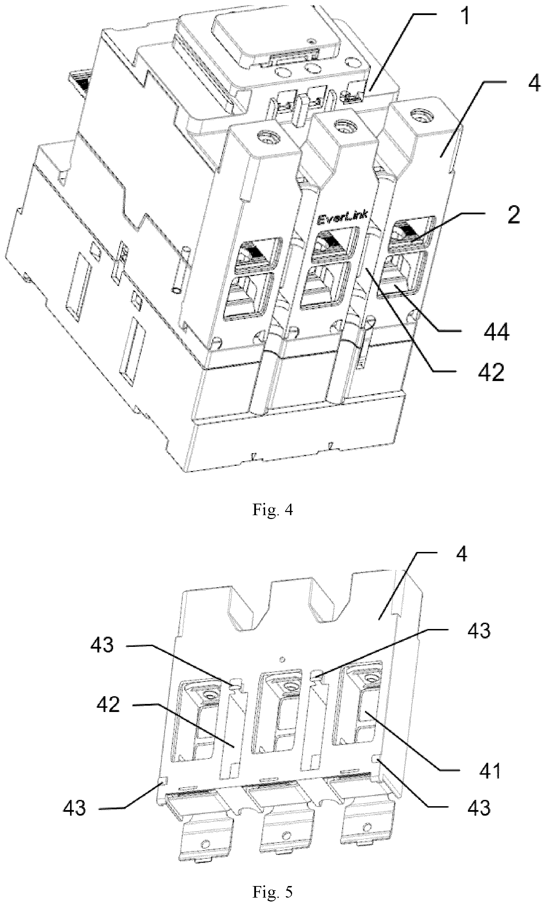

Fig. 4 is a perspective view of a contactor assembled with a second junction box 4 according to the present disclosure. Fig. 5 is a perspective view of a second junction box 4 according to the present disclosure. Referring to Figs. 4 and 5, the second junction box 4 has a similar structure to the first junction box 4, and only the differences from the first junction box 4 will be described below. Compared with the first junction box 4, the second junction box 4 is added with an elastic compensation function, that is, when the connected electric wire has a loosening trend, this part of the loosening gap can be compensated. Specifically, at least one of the upper crimping piece and the lower crimping piece 44 of the second junction box 4 may be a deformable elastic piece. In the embodiment shown in Figs. 4 and 5, the lower crimping piece 44 of the second junction box 4 is an elastic piece. When wiring, the lower crimping piece 44 is compressed to store energy; when the connected electric wire has a loosening trend, the lower crimping piece 44 releases energy and rebounds, and continues to press the electric wire to the wiring terminal 2. Alternatively, in another embodiment not shown, the second junction box 4 may include an upper elastic element that biases the upper crimping piece downward; and/or the junction box 4 may include a lower elastic element that biases the lower crimping piece 44 upward, thereby achieving a similar elastic compensation function.

### Third junction box

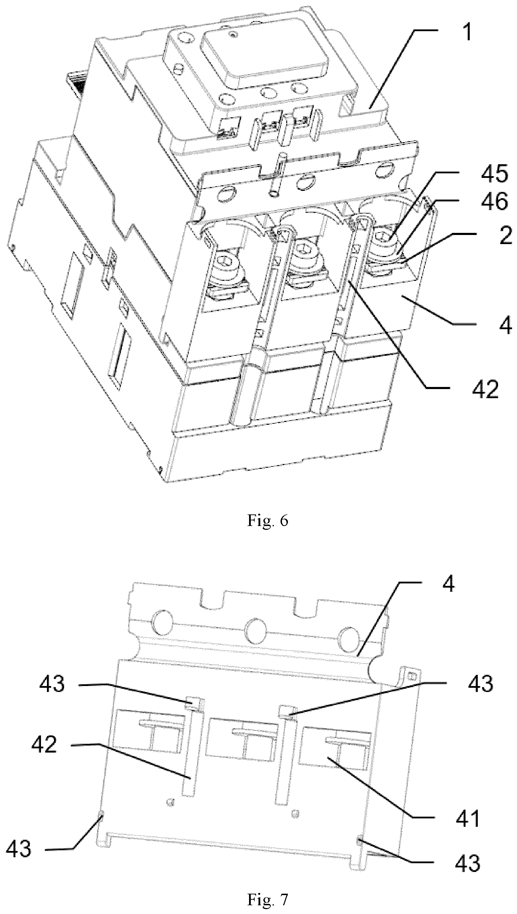

Fig. 6 is a perspective view of a contactor assembled with a third junction box 4 according to the present disclosure. Fig. 7 is a perspective view of a third junction box 4 according to the present disclosure. Referring to Figs. 6 and 7, the third junction box 4 includes installation features, isolation sheet avoidance holes 42, and wiring holes 41 which are similar to those of the first junction box 4, so that the third junction box 4 can also be adapted to the housing 1 of Fig. 1, so that the third junction box 4 can be assembled to the housing 1. The main difference between the third junction box 4 and the first junction box 4 is that, instead of the upper crimping piece and the lower crimping piece, the third junction box 4 uses a bolt 45 and a nut to press the electric wire (or copper bar) and the wiring terminal 2. Specifically, as illustrated by Fig. 6, the third junction box 4 may include a bolt 45 including a bolt post configured to pass through the terminal hole 21 of a corresponding wiring terminal 2 and a bolt head with a diameter being larger than the bolt post; a washer 46, arranged between the wiring terminal 2 and the bolt head, an outer diameter of the washer 46 is larger than the diameter of the bolt head, and a diameter of a center hole of the washer 46 is smaller than the diameter of the bolt head and allows the bolt to pass through; a nut, fixed to a box body of the junction box 4 below the wiring terminal 2; and an upper passage extending upward from a position of the wiring terminal 2, thereby allowing a tool to extend downward through the upper passage from the outside and tighten the bolt 45 to the nut, so that the washer 46 is pressed against the wiring terminal 2.

To sum up, the contactor according to the present disclosure can be applied to at least the following four connection modes:
1) Direct connection with a bare copper bar or a wire with lug;
2) A junction box for realizing crimping by an upper crimping piece and a lower crimping piece approaching to the wiring terminal;
3) A junction box with elastic compensation function, which realizes crimping by an upper crimping piece and a lower crimping piece approaching to the wiring terminal;
4) A junction box for realizing crimping by a tightening fit of a bolt and a nut to tighten.

Because the design of a contactor can meet at least four different connection modes of different customers at the same time, the application compatibility of the contactor is increased and the design cost and management cost are reduced.

The exemplary implementation of the contactor proposed by the present disclosure has been described in detail above with reference to the preferred embodiment. However, it can be understood by those skilled in the art that various variations and modifications can be made to the above specific embodiment without departing from the concept of the present disclosure, and various technical features and structures proposed by the present disclosure can be combined in various ways without exceeding the protection scope of this present disclosure.

## Claims

1. A contactor, comprising:
a housing;
a plurality of stationary contact brackets fixed to the housing, wherein each of the plurality of stationary contact brackets comprises a bracket body accommodated in the housing and a wiring terminal extending out of the housing and configured to be connected with an electric wire, the wiring terminal comprises a sheet-shaped terminal body and a terminal hole penetrating through a thickness of the terminal body; and
an isolation sheet, arranged between adjacent wiring terminals and separates the adjacent wiring terminals.

2. The contactor according to claim 1, wherein the isolation sheet is insulated and detachably assembled to the housing.

3. The contactor according to claim 1 or 2, wherein the contactor comprises a junction box detachably assembled to the housing, and the junction box comprises:
a plurality of wiring holes, each of the plurality of wiring holes being configured to accommodate a corresponding wiring terminal upon the junction box being assembled to the housing; and
an isolation sheet avoidance hole, arranged between adjacent wiring holes and configured to allow the isolation sheet to pass through upon the junction box being assembled to the housing.

4. The contactor according to claim 3, wherein a surface of the junction box facing the housing comprises a first installation feature, and a surface of the housing facing the junction box comprises a second installation feature, the first installation feature and the second installation feature cooperate with each other to assemble the junction box to the housing.

5. The contactor according to claim 4, wherein the first installation feature is a mounting boss and the second installation feature is a mounting groove.

6. The contactor according to claim 3, wherein the junction box further comprises:
an upper crimping piece positioned above the wiring terminal;
a lower crimping piece positioned below the wiring terminal; and
an actuating piece configured to simultaneously drive the upper crimping piece to move downward and the lower crimping piece to move upward toward the wiring terminal upon being driven.

7. The contactor according to claim 6, wherein at least one of the upper crimping piece and the lower crimping piece is a deformable elastic piece.

8. The contactor according to claim 6, wherein the junction box comprises an upper elastic element that biases the upper crimping piece downward,
and/or the junction box comprises a lower elastic element that biases the lower crimping piece upward.

9. The contactor according to claim 3, wherein the junction box further comprises:
a bolt comprising a bolt post configured to pass through the terminal hole of a corresponding wiring terminal and a bolt head with a diameter being lager than a diameter of the bolt post;
a washer arranged between the wiring terminal and the bolt head, an outer diameter of the washer is larger than the diameter of the bolt head, and a diameter of a center hole of the washer is smaller than the diameter of the bolt head and allows the bolt post to pass through;
a nut fixed to a box body of the junction box below the wiring terminal; and
an upper passage extending upward from a position of the wiring terminal, thereby allowing a tool to extend downward through the upper passage from outside and tighten the bolt to the nut, so that the washer is pressed against the wiring terminal.

10. The contactor according to claim 1 or 2, wherein the contactor comprises a first group of wiring terminals protruding out of the housing in a first direction and a second group of wiring terminals protruding out of the housing in a second direction opposite to the first direction.

11. The contactor according to claim 10, wherein the contactor comprises three stationary contact brackets and four isolation sheets, two of the four isolation sheets are respectively arranged between adjacent wiring terminals of the first group of wiring terminals and the other two of the four isolation sheets are respectively arranged between adjacent wiring terminals of the second group of wiring terminals.
